# FASCICULE DE BREVET EUROPEEN

(11) **EP 2 782 845 B1**
(45) Date de publication et mention de la délivrance du brevet: **02.03.2016**
(21) Numéro de dépôt: 12787465.9
(22) Date de dépôt: 20.11.2012
(51) Int. Cl.: B65D 83/38, B65D 83/62, B65D 83/42

(54) **DISPOSITIF DE FERMETURE DE BOITIER DIFFUSEUR RECHARGEABLE ET BOITIER DIFFUSEUR LE COMPRENANT**
VERSCHLUSSVORRICHTUNG FÜR EIN GEHÄUSE EINES NACHFÜLLBAREN DIFFUSORS UND DIFFUSORGEHÄUSE DAMIT
CLOSURE DEVICE FOR A REFILLABLE DIFFUSER HOUSING AND DIFFUSER HOUSING COMPRISING SAME

(30) Priorité: 22.11.2011 FR 1160651
(43) Date de publication de la demande: 01.10.2014
(73) Titulaire: Inospray, 16440 Nersac (FR)
(72) Inventeur: BEURCQ, Jean-Luc, F-16000 Angouleme (FR); DE MAILLARD, Thibault, F-16000 Angouleme (FR)
(74) Mandataire: Ipside
(86) Numéro de dépôt international: PCT/EP2012/073114
(87) Numéro de publication internationale: WO 2013/076081

(56) Documents cités:
- EP-A1- 0 765 822
- DE-U1- 9 013 487
- DE-U1- 29 500 893
- FR-A1- 2 785 594
- FR-A1- 2 951 140

## Description

La présente invention concerne un dispositif de fermeture de boîtier diffuseur rechargeable et un boîtier diffuseur le comprenant.

On connait des boîtiers diffuseurs à poche rechargeables comportant une poche munie d'une valve disposée dans une coupelle sertie sur un dôme lui même serti sur le boîtier pour lesquels le remplissage de la poche est réalisé au travers de la valve.

Pour pouvoir propulser le produit au travers de la valve le boîtier est mis sous pression par l'injection d'un gaz entre la paroi interne du boîtier et la paroi externe de la poche ce qui comprime cette dernière et permet la sortie du produit lorsque la valve est manoeuvrée en position ouverte.

Ce type de boîtier diffuseur est utile par exemple lorsqu'il est souhaitable de ne pas mélanger le produit avec le gaz propulseur ou lorsque le produit liquide ou pâteux est difficile à distribuer.

Un exemple de boîtier diffuseur rechargeable pour lequel la poche peut être remplacée est décrit dans le document FR 2 951 140 A1 pour lequel un boîtier muni d'un rebord supérieur pourvu d'un pas de vis reçoit un dôme assujetti au boîtier au moyen d'une bague se vissant sur le boîtier.

Le dôme est solidaire d'une valve disposée dans une coupelle et sur laquelle une poche est fixée de manière étanche.

Le montage de la valve sur le dôme est réalisé par sertissage d'une coupelle de la valve sur le dôme de sorte que la liaison entre la coupelle soit étanche et résistante à la pression.

Ce boîtier a pour particularité de comporter une poche remplie d'un produit à pulvériser, un gaz propulseur étant injecté dans le boîtier autour de la poche qui est ainsi comprimée de sorte que le produit qu'elle contient est pulvérisé lorsque l'on ouvre la valve.

Pour changer la poche une fois que la pression dans le boîtier est suffisamment basse, l'utilisateur dévisse la bague appliquant le dôme porteur de la valve sur le corps du boîtier et change l'ensemble dôme poche et valve.

Dans un tel boîtier, la valve est traditionnellement montée sur une coupelle sertie sur le dôme et la fabrication de la poche à valve est rendue complexe par la présence du dôme qui gène l'accès à la partie inférieure de la valve sur laquelle est soudée la poche si l'on veut souder la poche pleine sur la valve.

Le document EP 0 765 822 A1 décrit un dispositif de fermeture de boîtier diffuseur rechargeable comprenant une valve montée dans une coupelle et un dôme de liaison entre la coupelle et un rebord supérieur d'un récipient du boîtier, pour lequel le dôme de liaison comporte un ou plusieurs bords d'appui d'un bourrelet périphérique (9) de la coupelle et une collerette d'appui sur ledit rebord supérieur, le dispositif comportant en outre un capot, muni d'une ouverture d'accès à la valve, adapté à coiffer le dôme de liaison et à se fixer sur le récipient avec des moyens de retenue élastiques en réalisant un dispositif de décharge de gaz. Le document DE29500893 U1 décrit un boîtier diffuseur pour lequel un dôme sur lequel est sertie une coupelle porte valve est fixé sur un réservoir au moyen d'une bague vissée sur le réservoir et emprisonnant un rebord périphérique du dôme. Le document FR 2 785 594 A1 perfectionne le dispositif du document DE29500893 U1 par l'ajout d'un joint entre le rebord supérieur du réservoir et le rebord périphérique du dôme.

Remplir la poche montée sur la valve sans le dôme est par ailleurs impossible car la coupelle de la valve doit être sertie sur le dôme qui ne peut être glissé sur la poche remplie.

Le dôme est en outre encombrant pour le conditionnement de la poche à valve remplie et l'opération de sertissage de la coupelle sur le dôme a un coût non négligeable.

La présente invention a pour but de simplifier la fabrication de la poche à valve et son conditionnement tout en conservant une valve traditionnelle à coupelle.

Pour ce faire la présente invention propose en premier lieu un dispositif de fermeture de boîtier diffuseur rechargeable comprenant les les caractéristiques de la revendication 1.

Selon un premier mode de réalisation, le dôme de liaison est constitué de deux demi-coques s'assemblant sous la coupelle de part et d'autre de la valve.

Les demi-coques peuvent éventuellement être pourvues d'une charnière les reliant.

Avantageusement, le dôme de liaison comporte un col formant ledit bord d'appui et s'insérant dans une gorge annulaire formée par un retour du bourrelet périphérique de la coupelle.

Selon un second mode de réalisation, le dôme de liaison comporte une ouverture centrale de passage de la coupelle pourvue de pattes ressort s'effaçant au passage de la coupelle et formant lesdits bords d'appui après insertion de la coupelle dans le dôme.

L'ouverture centrale comporte avantageusement des bossages de centrage de la coupelle.

L'invention concerne en outre un boîtier diffuseur rechargeable comportant un dispositif de fermeture selon l'invention pour lequel le récipient et le capot comportent des moyens de fixation complémentaires.

Selon un premier mode de réalisation, les moyens de fixation complémentaires sont réalisés par une jupe du capot à filetage interne et un filetage externe de la paroi cylindrique du récipient.

Selon un mode de réalisation alternatif, les moyens de fixation complémentaires sont réalisés par des moyens de fixation à baïonnette ou quart de tour disposés entre la paroi interne d'une jupe du capot et la paroi externe de la paroi cylindrique du récipient.

Entre le récipient et la coupelle, le dôme forme avantageusement une entretoise de maintien du bourrelet de la coupelle plaqué contre les premiers moyens d'étanchéité.

Le capot comporte avantageusement des seconds moyens d'étanchéité adaptés à s'appliquer sur le rebord supérieur du récipient.

Selon une première variante les premiers et seconds moyens d'étanchéité sont réalisés sous forme de joints toriques.

Selon une seconde variante le capot et les premiers et seconds moyens d'étanchéité sont réalisés par bi-injection.

L'invention concerne en outre un boîtier rechargeable pour lequel le bord supérieur du récipient et la collerette du dôme comportent des profils d'encastrement complémentaires.

L'invention concerne enfin une recharge pour boîtier diffuseur rechargeable comportant un dispositif de fermeture selon l'invention qui comprend une poche, une valve solidaire d'une coupelle et le dôme de l'invention pour laquelle le dôme constitue un support de marquage.

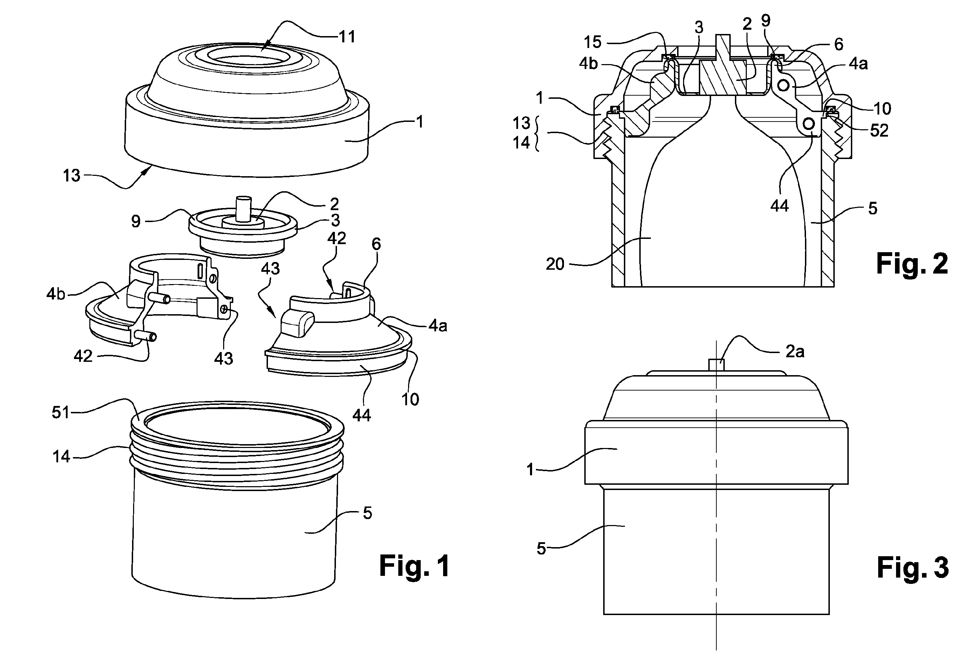

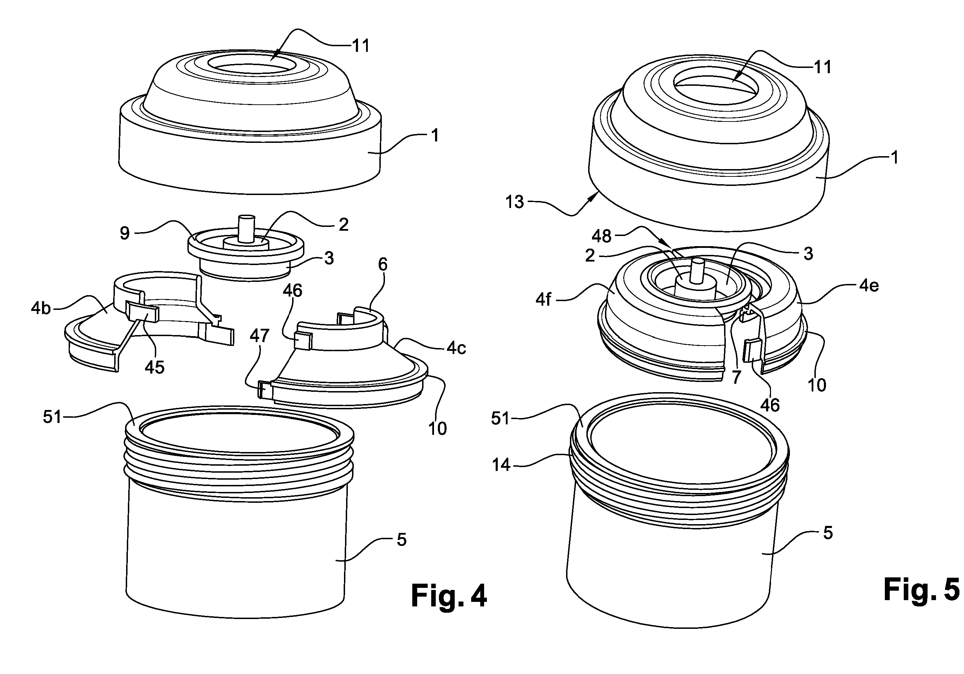

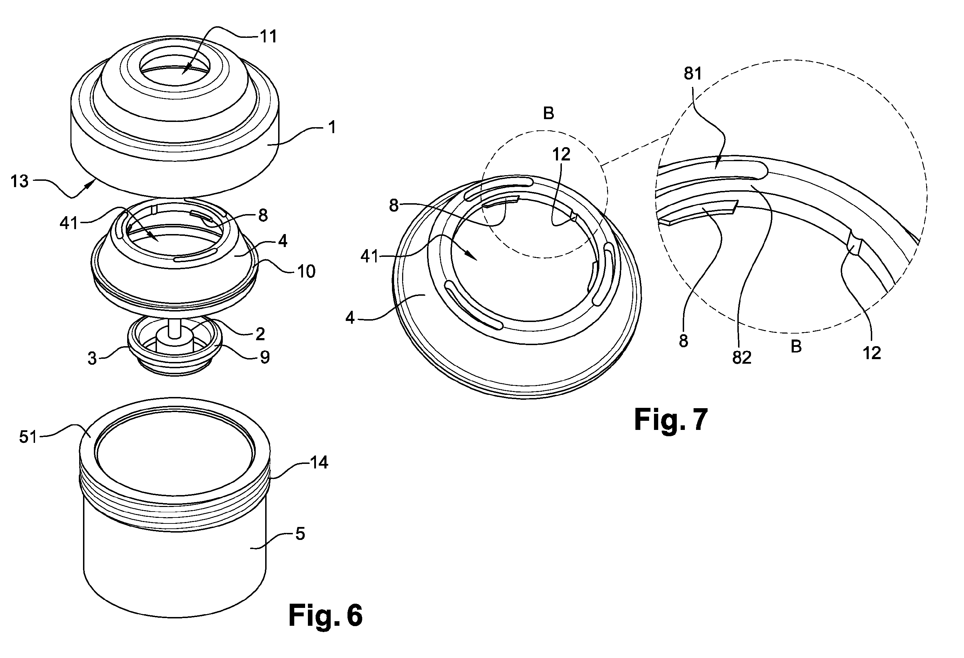

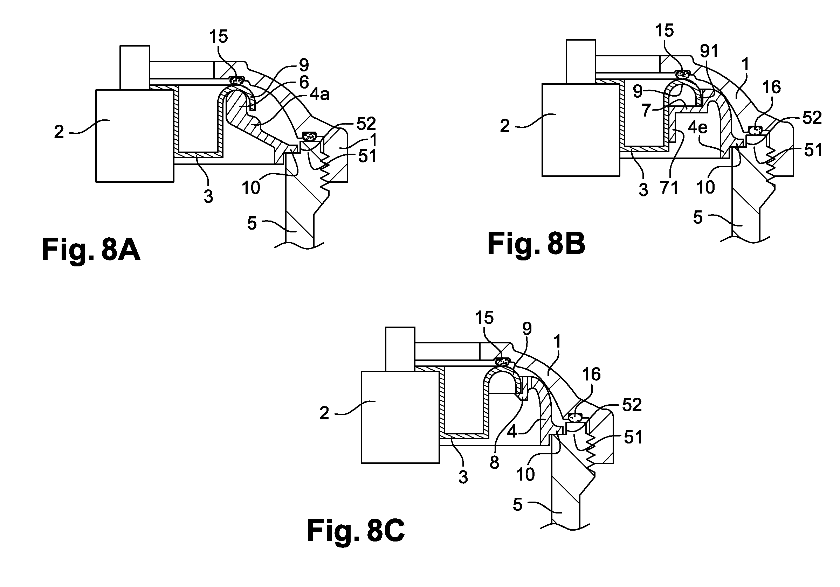

D'autres caractéristiques et avantages de l'invention seront apparents à la lecture de la description qui suit d'exemples de réalisation non limitatifs de l'invention en référence aux dessins qui représentent:
en figure 1: une vue en perspective éclaté d'un premier mode de réalisation d'un dispositif de l'invention,
en figure 2: une vue en coupe du dispositif de la figure 1 ;
en figure 3: une vue de côté d'un boîtier de l'invention assemblé;
en figure 4: une vue en perspective éclaté d'une première variante du dispositif de la figure 1 ;
en figure 5: une vue en perspective éclaté d'une seconde variante du dispositif de la figure 1 ;
en figure 6: une vue en perspective éclaté d'un second mode de réalisation d'un dispositif de l'invention;
en figure 7: une vue en perspective d'un dôme du dispositif de la figure 6 et un détail agrandi de ce dôme;
aux figures 8A, 8B, 8C: des vues en coupe de détails de réalisation des dispositifs des figures 1, 4 pour la figure 8A, 5 pour la figure 8B et 6 pour la figure 8C.

L'invention concerne les boîtier diffuseurs rechargeables comprenant une valve 2 montée dans une coupelle 3.

Selon l'invention, un dôme amovible 4, 4a, 4b, 4c, 4d, 4e, 4f représenté selon plusieurs modes de réalisation aux figures 1, 4, 5 et 6 notamment assure une liaison entre la coupelle et un rebord supérieur 51 d'un récipient 5 du boîtier.

Le récipient 5 est partiellement représenté et correspond par exemple au récipient du boîtier connu du document FR 2 951 140 A1 précité.

Comme il sera vu plus bas, le dôme de liaison comporte un ou plusieurs bords d'appui 6, 7, 8 d'un bourrelet périphérique 9 de la coupelle et une collerette d'appui 10 sur le rebord supérieur du récipient.

Le dispositif comporte en outre un capot 1, muni d'une ouverture 11 d'accès à la valve et adapté à coiffer le dôme de liaison et se fixer de manière étanche sur le récipient.

La figure 1 représente un premier mode de réalisation de l'invention qui comporte un dôme en deux parties 4a, 4b de liaison entre la coupelle et un rebord supérieur 51 d'un récipient 5 du boîtier.

Le dôme de liaison est constitué de deux demi-coques 4a, 4b s'assemblant sous la coupelle 3 de part et d'autre de la valve 2.

Les demi-coques 4a, 4b sont avantageusement identiques et pourvues selon ce mode de réalisation de tourillons 42 reçus dans des alésages 43 pour maintenir l'assemblage des demi-coques avant la pose de la valve 2 munie de sa coupelle 3.

Pour assembler le dôme et la coupelle de la valve, le dôme de liaison 4a, 4b comporte un col 6 formant ledit bord d'appui et s'insérant dans une gorge annulaire formée par un retour du bourrelet périphérique 9 de la coupelle.

Ainsi l'assemblage de la coupelle sur le dôme est relativement solide.

Une fois la valve montée sur le dôme on positionne le dôme sur le récipient 5. Pour ce faire, le dôme comporte une collerette 10 et s'assemble sur le récipient au moyen de cette collerette.

Le bord supérieur 51 du récipient 5 et la collerette 10 du dôme comportent des profils d'encastrement complémentaires permettant de correctement centrer le dôme sur le récipient.

Le profil d'encastrement du bord supérieur 51 est ici réalisé par une découpe annulaire 52 formée dans le bord supérieur 51 du côté de la face interne du récipient.

La partie inférieure du dôme comporte en outre une jupe 44 qui s'appuie contre la paroi interne du récipient 5 de sorte que le dôme est maintenu en position et pour tenir les deux demi-coques ensemble comme représenté en figure 2.

Cet assemblage démontable permet de disposer une recharge comportant une poche 20, la valve 2 et la coupelle 3 dans le récipient d'un boîtier rechargeable.

Pour fermer le boîtier et réaliser son étanchéité le dispositif comporte un capot 1 qui coiffe l'ensemble valve dôme.

Toujours selon la figure 2, le capot 1 et le récipient 5 comportent des moyens de fixation complémentaires 13, 14 ici réalisés par une jupe du capot à filetage interne et un filetage externe de la paroi cylindrique du récipient.

Le capot se visse ainsi sur le récipient jusqu'à s'appliquer sur le bourrelet 9 de la coupelle.

Une vue agrandie de l'assemblage est donnée en figure 8A. Cette figure permet de mieux représenter la liaison entre le capot et le bourrelet 9, le capot comportant des premiers moyens d'étanchéité 15 sous forme d'un joint annulaire adaptés à s'appliquer sur le dessus du bourrelet de la coupelle.

Le capot appuie sur le bourrelet 9 de la coupelle au niveau du joint annulaire 15 du capot ce qui crée une liaison étanche entre le capot et la coupelle 3.

Le profil d'encastrement du bord supérieur 51, réalisé par une découpe annulaire 52 formée dans le bord supérieur 51 du côté de la face interne du récipient permet à la collerette 10 de se trouver en retrait par rapport au sommet du bord supérieur 51 qui forme une surface d'appui pour des seconds moyens d'étanchéité 16 sous forme d'un second joint annulaire, ces moyens étant adaptés à s'appliquer sur le rebord supérieur 51 du récipient 5 pour réaliser une seconde liaison étanche.

Ainsi, le dôme 4a, 4b forme une entretoise de maintien du bourrelet 9 de la coupelle plaqué contre les premiers moyens d'étanchéité 15, le dôme assurant une fonction de positionnement mécanique de la coupelle et de la valve alors que la fonction d'étanchéité est réalisée au niveau du capot 1.

Les premiers et seconds moyens d'étanchéité 15, 16 du capot 1 peuvent être réalisés sous forme de joints toriques ou par bi-injection, le capot étant dans ce cas injecté dans une première matière et les joints injectés dans une seconde matière, par exemple élastomère.

Ce premier mode de réalisation pour lequel le dôme est en deux parties symétriques permet soit de réutiliser le dôme lors d'un remplacement de l'ensemble poche et valve soit d'assembler en usine le dôme sous la coupelle après remplissage de la poche 20 sous la valve et de fournir en remplacement des poches à valve munies d'un dôme.

Le boîtier assemblé est représenté en figure 3, selon laquelle le capot 1 coiffe le récipient 5 laissant apparent le tube de sortie 2a de la valve.

La figure 4 représente une variante du dispositif de la figure 1 pour laquelle les tourillons et alésages d'assemblage des demi coques sont remplacés par des doigts 45, 47 munis de profils d'encliquetages avec des rampes 46 sur les demi coques 4c, 4d.

Le reste de l'assemblage du dôme respectivement sous la coupelle 3 et sur le récipient 5 est le même que pour le dispositif de la figure 1 et la liaison entre le capot et le bourrelet 9 reste identique à la liaison représentée en figure 8A, le capot comportant des premiers moyens d'étanchéité 15 sous forme d'un joint annulaire adaptés à s'appliquer sur le dessus du bourrelet de la coupelle et le dôme comprend un col 6 s'insérant dans la gorge constituée par le retour du bourrelet 9.

La figure 5 correspond à une variante pour laquelle les demi-coques sont reliées par une charnière 48 permettant une ouverture du dôme pour laisser passer la coupelle 3 de la valve 2.

Cette variante pour laquelle les deux demi-coques sont solidarisées par une charnière comporte pour l'assemblage du dôme sous la coupelle des doigts d'encliquetage 46 représentés en figure 5 qui permettent de refermer le dôme sur la coupelle.

L'assemblage du dôme de cette variante sur la coupelle sous le capot 1 est représenté à la figure 8B et, dans ce mode de réalisation, le col de l'exemple de la figure 1 est remplacé par un rebord annulaire 7 sur lequel s'appuie le retour 91 du bourrelet 9 et un bord tombé 71 contre lequel s'appuie une face périphérique de la coupelle 3.

Il reste possible selon l'invention de prévoir un tel rebord annulaire dans les variantes des figures 1 et 4 ou de prévoir un col dans la variante de la figure 5.

La figure 6 correspond à un second mode de réalisation pour lequel le dôme de liaison 4 est en une seule pièce et comporte une ouverture centrale 41 de passage de la coupelle.

Le montage du dôme sur la coupelle se fait ici en faisant rentrer la coupelle dans son logement réalisé par l'ouverture centrale par le dessous du dôme.

Le dôme est pourvu en partie inférieure de l'ouverture centrale de pattes ressort 8 qui s'effacent lors de l'introduction de la coupelle et reviennent en position une fois la coupelle positionnée dans l'ouverture centrale pour former des bords d'appui du retour du bourrelet 9 qui retiennent la coupelle et l'empêchent de redescendre dans l'ouverture.

La figure 7 représente les pattes ressort 8 dont l'élasticité est créée par des lumières 81 réalisées dans le dôme, les pattes étant ainsi réalisées dans des poutres 82 ressort d'épaisseur réduite par rapport à l'épaisseur du tour de l'ouverture centrale 41.

Selon cet exemple, trois pattes réparties à 120 degrés sont réalisées et l'ouverture centrale 41 comporte en outre des bossages 12 de centrage de la coupelle disposée entre les pattes.

L'assemblage du dôme et de la coupelle est représenté en coupe à la figure 8C. Le dessous des pattes 8 comportent un profil en pente pour faciliter l'insertion de la coupelle 3 du bas vers le haut et la face supérieure des pattes est plane pour réaliser une surface d'appui du bord externe de la coupelle formé par le retour du bourrelet 9.

Pour ce second mode de réalisation, le capot reste le moyen d'étanchéité et comporte aussi un joint 15 au niveau du bourrelet 9 et un joint 16 s'appuyant sur le tour 51 du récipient 5.

Dans ce mode de réalisation, le bord supérieur 51 du récipient 5 et la collerette 10 du dôme comportent aussi des profils d'encastrement complémentaires qui centrent correctement le dôme lors de sa pose sur le récipient.

Ce dernier dôme 4 est particulièrement adapté à la réalisation d'un dôme réutilisable ou à la réalisation d'une recharge à dôme assemblée en usine car la poche remplie ne gène pas l'assemblage de la valve avec sa collerette dans le dôme, cet assemblage se faisant par le dessous du dôme.

Selon les exemples représentés, les moyens de fixation complémentaires 13, 14 du capot sur le récipient sont réalisés par des moyens à vis mais ces moyens peuvent aussi être réalisés par des moyens de fixation à baïonnette ou quart de tour disposés entre la paroi interne d'une jupe du capot et la paroi externe de la paroi cylindrique du récipient.

Dans l'ensemble des exemples représentés, le dôme reste une pièce peu onéreuse et simple à fabriquer du fait qu'il ne participe pas à l'étanchéité mais n'a qu'une fonction d'entretoise entre la collerette et le récipient pour supporter la collerette dans laquelle se trouve la valve et maintenir le bourrelet 9 en place de sorte que le joint 15 puisse s'appliquer correctement contre ce bourrelet.

De ce fait il est possible de considérer le dôme comme une pièce jetable qui sera changée avec la poche alors que le capot assurant l'étanchéité du boîtier rechargeable sera réutilisé au même titre que le récipient.

Dans le cas où le dôme est un consommable changé avec la recharge comprenant la poche équipée de sa valve et de sa coupelle, il peut faire office de support de marquage pour le nom du produit contenu dans la poche, des caractéristiques du produit ou autres indications souhaitables.

L'invention n'est pas limitée aux exemples représentés et notamment le capot peut comporter une empreinte de positionnement d'un bouton diffuseur muni d'un canal de sortie de produit dans lequel s'insère le tube 2a de la valve.

## Revendications

1. Dispositif de fermeture de boîtier diffuseur rechargeable comprenant une valve (2) montée dans une coupelle (3) et un dôme (4, 4a, 4b, 4c, 4d, 4e, 4f) de liaison entre la coupelle et un rebord supérieur (51) d'un récipient (5) du boîtier, pour lequel le dôme de liaison comporte un ou plusieurs bords d'appui (6, 7, 8) d'un bourrelet périphérique (9) de la coupelle et une collerette d'appui (10) sur ledit rebord supérieur, **caractérisé en ce que** le dispositif comporte en outre un capot (1), muni d'une ouverture (11) d'accès à la valve, adapté à coiffer le dôme de liaison et à se fixer de manière étanche sur le récipient et comportant des premiers moyens d'étanchéité (15) adaptés à s'appliquer sur le dessus du bourrelet de la coupelle.

2. Dispositif de fermeture de boîtier diffuseur rechargeable selon la revendication 1, **caractérisé en ce que** le dôme de liaison est constitué de deux demi-coques (4a, 4b, 4c, 4d, 4e, 4f) s'assemblant sous la coupelle (3) de part et d'autre de la valve (2).

3. Dispositif de fermeture de boîtier diffuseur rechargeable selon la revendication 2, **caractérisé en ce que** les de deux demi-coques (4e, 4f) sont reliées par une charnière.

4. Dispositif de fermeture de boîtier diffuseur rechargeable selon la revendication 1, 2 ou 3, **caractérisé en ce que** le dôme de liaison (4a, 4b, 4c, 4d) comporte un col (6) formant ledit bord d'appui et s'insérant dans une gorge annulaire formée par un retour du bourrelet périphérique (9) de la coupelle.

5. Dispositif de fermeture de boîtier diffuseur rechargeable selon la revendication 1, **caractérisé en ce que** le dôme de liaison (4) comporte une ouverture centrale (41) de passage de la coupelle pourvue de pattes ressort (8) s'effaçant au passage de la coupelle et formant lesdits bords d'appui après insertion de la coupelle dans le dôme.

6. Dispositif de fermeture de boîtier diffuseur rechargeable selon la revendication 5, **caractérisé en ce que** l'ouverture centrale (41) comporte des bossages (12) de centrage de la coupelle.

7. Boîtier diffuseur rechargeable comportant un dispositif de fermeture selon l'une quelconque des revendications précédentes, **caractérisé en ce que** le récipient (5) et le capot (1) comportent des moyens de fixation complémentaires (13, 14).

8. Boîtier diffuseur rechargeable selon la revendication 7, **caractérisé en ce que** les moyens de fixation complémentaires (13, 14) sont réalisés par une jupe du capot à filetage interne et un filetage externe de la paroi cylindrique du récipient.

9. Boîtier diffuseur rechargeable selon la revendication 7, **caractérisé en ce que** les moyens de fixation complémentaires (13, 14) sont réalisés par des moyens de fixation à baïonnette ou quart de tour disposés entre la paroi interne d'une jupe du capot et la paroi externe de la paroi cylindrique du récipient.

10. Boîtier diffuseur rechargeable comportant un dispositif de fermeture selon l'une quelconque des revendications 1 à 6, **caractérisé en ce qu'**entre le récipient et la coupelle, le dôme (4, 4a, 4b, 4c, 4d, 4e, 4f) forme une entretoise de maintien du bourrelet (9) de la coupelle plaqué contre les premiers moyens d'étanchéité (15).

11. Boîtier diffuseur rechargeable selon l'une quelconque des revendications 7 à 10, **caractérisé en ce que** le capot comporte des seconds moyens d'étanchéité (16) adaptés à s'appliquer sur le rebord supérieur (51) du récipient (5).

12. Boîtier diffuseur rechargeable selon la revendication 11, **caractérisé en ce que** les premiers et seconds moyens d'étanchéité (15, 16) sont réalisés sous forme de joints toriques.

13. Boîtier diffuseur rechargeable selon la revendication 11, **caractérisé en ce que** le capot et les premiers et seconds moyens d'étanchéité (15, 16) sont réalisés par bi-injection.

14. Boîtier diffuseur rechargeable selon l'une quelconque des revendications 7 à 13, **caractérisé en ce que** le bord supérieur (51) du récipient (5) et la collerette (10) du dôme comportent des profils d'encastrement complémentaires.

15. Recharge pour boîtier diffuseur rechargeable comportant un dispositif de fermeture selon l'une quelconque des revendications 1 à 6, comprenant une poche (20), une valve (2) solidaire d'une coupelle (3) et un dôme (4, 4a, 4b, 4c, 4d, 4e, 4f) **caractérisée en ce que** le dôme constitue un support de marquage.

## Patentansprüche

1. Verschlussvorrichtung eines nachfüllbaren Spendergehäuses, die ein in eine Schale (3) montiertes Ventil (2) und eine Verbindungskuppel (4, 4a, 4b, 4c, 4d, 4e, 4f) zwischen der Schale und einer oberen Randleiste (51) eines Behälters (5) des Gehäuses enthält, wobei die Verbindungskuppel einen oder mehrere Auflageränder (6, 7, 8) für einen Umfangswulst (9) der Schale und einen Auflagekragen (10) auf der oberen Randleiste aufweist, **dadurch gekennzeichnet, dass** die Vorrichtung außerdem eine mit einer Zugangsöffnung (11) zum Ventil versehene Kappe (1) aufweiset, die die Verbindungskuppel bedecken und dicht auf dem Behälter befestigt werden kann, und die erste Dichteinrichtungen (15) aufweist, die sich auf die Oberseite des Wulsts der Schale auflegen können.

2. Verschlussvorrichtung eines nachfüllbaren Spendergehäuses nach Anspruch 1, **dadurch gekennzeichnet, dass** die Verbindungskuppel aus zwei Halbschalen (4a, 4b, 4c, 4d, 4e, 4f) besteht, die unter der Schale (3) zu beiden Seiten des Ventils (2) zusammengesetzt werden.

3. Verschlussvorrichtung eines nachfüllbaren Spendergehäuses nach Anspruch 2, **dadurch gekennzeichnet, dass** die zwei Halbschalen (4e, 4f) durch ein Scharnier verbunden sind.

4. Verschlussvorrichtung eines nachfüllbaren Spendergehäuses nach Anspruch 1, 2 oder 3, **dadurch gekennzeichnet, dass** die Verbindungskuppel (4a, 4b, 4c, 4d) einen Hals (6) aufweist, der den Auflagerand bildet und sich in eine Ringnut einfügt, die von einem Umschlag des Umfangswulsts (9) der Schale gebildet wird.

5. Verschlussvorrichtung eines nachfüllbaren Spendergehäuses nach Anspruch 1, **dadurch gekennzeichnet, dass** die Verbindungskuppel (4) eine zentrale Durchgangsöffnung (41) für die Schale aufweist, die mit Federlaschen (8) versehen ist, die beim Durchgang der Schale zurückweichen und nach der Einführung der Schale in die Kuppel die Auflageränder bilden.

6. Verschlussvorrichtung eines nachfüllbaren Spendergehäuses nach Anspruch 5, **dadurch gekennzeichnet, dass** die zentrale Öffnung (41) Wölbungen (12) zum Zentrieren der Schale aufweist.

7. Nachfüllbares Spendergehäuse, das eine Verschlussvorrichtung nach einem der vorhergehenden Ansprüche aufweist, **dadurch gekennzeichnet, dass** der Behälter (5) und die Kappe (1) komplementäre Befestigungseinrichtungen (13, 14) aufweisen.

8. Nachfüllbares Spendergehäuse nach Anspruch 7, **dadurch gekennzeichnet, dass** die komplementären Befestigungseinrichtungen (13, 14) von einer Schürze der Kappe mit Innengewinde und einem Außengewinde der zylindrischen Wand des Behälters realisiert werden.

9. Nachfüllbares Spendergehäuse nach Anspruch 7, **dadurch gekennzeichnet, dass** die komplementären Befestigungseinrichtungen (13, 14) durch Bajonett- oder Drehbefestigungseinrichtungen realisiert werden, die zwischen der Innenwand einer Schürze der Kappe und der Außenwand der zylindrischen Wand des Behälters angeordnet sind.

10. Nachfüllbares Spendergehäuse, das eine Verschlussvorrichtung nach einem der Ansprüche 1 bis 6 aufweist, **dadurch gekennzeichnet, dass** die Kuppel (4, 4a, 4b, 4c, 4d, 4e, 4f) zwischen dem Behälter und der Schale ein Abstandsstück zum Halt des gegen die ersten Dichteinrichtungen (15) gedrückten Wulsts (9) der Schale bildet.

11. Nachfüllbares Spendergehäuse nach einem der Ansprüche 7 bis 10, **dadurch gekennzeichnet, dass** die Kappe zweite Dichteinrichtungen (16) aufweist, die sich auf die obere Randleiste (51) des Behälters (5) auflegen können.

12. Nachfüllbares Spendergehäuse nach Anspruch 11, **dadurch gekennzeichnet, dass** die ersten und zweiten Dichteinrichtungen (15, 16) in Form von Dichtringen realisiert werden.

13. Nachfüllbares Spendergehäuse nach Anspruch 11, **dadurch gekennzeichnet, dass** die Kappe und die ersten und zweiten Dichteinrichtungen (15, 16) durch Bi-Injektion realisiert werden.

14. Nachfüllbares Spendergehäuse nach einem der Ansprüche 7 bis 13, **dadurch gekennzeichnet, dass** der obere Rand (51) des Behälters (5) und der Kragen (10) der Kuppel komplementäre Einbauprofile aufweisen.

15. Nachfüllung für ein nachfüllbares Spendergehäuse, das eine Verschlussvorrichtung nach einem der Ansprüche 1 bis 6 aufweist, die einen Beutel (20), ein fest mit einer Schale (3) verbundenes Ventil (2) und eine Kuppel (4, 4a, 4b, 4c, 4d, 4e, 4f) enthält, **dadurch gekennzeichnet, dass** die Kuppel einen Markierungsträger bildet.

## Claims

1. Closure device for a refillable diffuser housing comprising a valve (2) mounted in a cup (3) and a connection dome (4, 4a, 4b, 4c, 4d, 4e, 4f) between the cup and an upper rim (51) of a container (5) of the housing, for which the connection dome comprises one or more bearing edges (6, 7, 8) for a peripheral bead (9) of the cup and a bearing collar (10) on said upper rim, **characterized in that** the device further comprises a cap (1), provided with an opening (11) for access to the valve, which is designed to cover the connection dome and to attach in a sealed manner on the container and comprising first sealing means (15) designed to press against the upper side of the bead of the cup.

2. Closure device for a refillable diffuser housing according to Claim 1, **characterized in that** the connection dome consists of two half-shells (4a, 4b, 4c, 4d, 4e, 4f) which are assembled below the cup (3) on either side of the valve (2).

3. Closure device for a refillable diffuser housing according to Claim 2, **characterized in that** the two half-shells (4e, 4f) are connected by a hinge.

4. Closure device for a refillable diffuser housing according to Claim 1, 2 or 3, **characterized in that** the connection dome (4a, 4b, 4c, 4d) comprises a neck (6) that forms said bearing edge and is inserted into an annular channel formed by a turnback of the peripheral bead (9) of the cup.

5. Closure device for a refillable diffuser housing according to Claim 1, **characterized in that** the connection dome (4) comprises a central opening (41) through which the cup passes and which is provided with spring tabs (8) that are effaced when the cup passes through and form said bearing edges after insertion of the cup in the dome.

6. Closure device for a refillable diffuser housing according to Claim 5, **characterized in that** the central opening (41) comprises projections (12) for centring the cup.

7. Refillable diffuser housing comprising a closure device according to any one of the preceding claims, **characterized in that** the container (5) and the cap (1) comprise complementary attachment means (13, 14).

8. Refillable diffuser housing according to Claim 7, **characterized in that** the complementary attachment means (13, 14) consist of a skirt of the cap having an internal thread and an external thread of the cylindrical wall of the container.

9. Refillable diffuser housing according to Claim 7, **characterized in that** the complementary attachment means (13, 14) consist of bayonet or quarter-turn attachment means arranged between the internal wall of a skirt of the cap and the external wall of the cylindrical wall of the container.

10. Refillable diffuser housing comprising a closure device according to any one of Claims 1 to 6, **characterized in that**, between the container and the cup, the dome (4, 4a, 4b, 4c, 4d, 4e, 4f) forms a spacer for keeping the bead (9) of the cup pressed against the first sealing means (15).

11. Refillable diffuser housing according to any one of Claims 7 to 10, **characterized in that** the cap comprises second sealing means (16) designed to press against the upper rim (51) of the container (5).

12. Refillable diffuser housing according to Claim 11, **characterized in that** the first and second sealing means (15, 16) are in the form of O-rings.

13. Refillable diffuser housing according to Claim 11, **characterized in that** the cap and the first and second sealing means (15, 16) are produced by two-shot injection moulding.

14. Refillable diffuser housing according to any one of Claims 7 to 13, **characterized in that** the upper edge (51) of the container (5) and the collar (10) of the dome comprise complementary nesting profiles.

15. Refill for a refillable diffuser housing comprising a closure device according to any one of Claims 1 to 6, comprising a pouch (20), a valve (2) secured to a cup (3) and a dome (4, 4a, 4b, 4c, 4d, 4e, 4f), **characterized in that** the dome constitutes a marking support.
